# EUROPÄISCHE PATENTSCHRIFT

(11) **EP 0 578 936 B1**
(45) Veröffentlichungstag und Bekanntmachung des Hinweises auf die Patenterteilung: **19.07.1995**
(21) Anmeldenummer: 93106944.7
(22) Anmeldetag: 29.04.1993
(51) Int. Cl.: C09D 5/00

(54) **Korrosionsschutzmittel für metallische Werkstücke**
Anti-corrosive agent for metal objects
Agent anti-corrosif pour objets en métal

(30) Priorität: 11.07.1992 DE 4222894
(43) Veröffentlichungstag der Anmeldung: 19.01.1994
(73) Patentinhaber: AE GOETZE GmbH, D-51399 Burscheid (DE)
(72) Erfinder: Müller, Hans-Joachim, W-5630 Remscheid 11 (DE); Plankert, Hans-Wilhelm, W-5090 Leverkusen 1 (DE)

(56) Entgegenhaltungen:
- EP-A- 0 363 824
- DE-A- 3 341 121
- FR-B- 1 500 947
- US-A- 4 752 336

## Beschreibung

Die Erfindung betrifft ein Korrosionsschutzmittel für die Herstellung korrosionsschützender Überzüge auf metallischen Werkstücken für die Lagerung bis zum Einbau, basierend auf einem in einem Lösungsmittel gelösten Wachs.

In der Praxis übliche Korrosionsschutzmittel zur Herstellung von korrosionsschützenden Überzügen auf metallischen Werkstücken vor allem für den Zeitraum zwischen deren Fertigung bis zum Einbau bestehen bevorzugt aus in leicht flüchtigen Lösungsmitteln gelösten mineralischen Wachsen oder Fetten. Die metallischen Werkstücke werden dazu nach ihrer Fertigung in die Korrosionsschutzlösung getaucht, so daß sich dann nach dem Abdampfen der leicht flüchtigen Lösungsmittel der schützende Überzug auf den Werkstücken ausbildet. Falls erforderlich, können die Überzüge dann vor dem Einbau durch beispielsweise Lösen, Abwaschen oder Abschmelzen wieder entfernt werden.

Entsprechend der Anwendung soll das Korrosionsschutzmittel das gegebenenfalls geometrisch kompliziert gebaute Werkstück zur Bildung einer möglichst gleichmäßigen dicken Überzugsschicht benetzen, und dazu werden ausreichende Korrosionsschutzeigenschaften des Überzuges bei Lagerung des Werkstückes über längere Zeiträume gefordert. Der Überzug soll eine gute Haftung auf dem Werkstück besitzen, er darf nicht mit anderen Werkstücken oder der Verpackung verkleben, er darf keine Durchnässungen des Verpackungsmaterials bewirken, und er darf in Einbausituation keine chemischen Reaktionen zu den Einbaupartnern besitzen.

Übliche, in derartigen Korrosionsschutzmitteln verwendete, leicht verdampfbare Lösungsmittel sind die chlorierten Kohlenwasserstoffe Trichlorethylen oder Perchlorethylen, die zwar als unbrennbare Flüssigkeiten problemlos zu handhaben sind, die jedoch gesundheitsschädlich sind und nach den jetzigen gesetzlichen Bestimmungen nur mit umfangreichen Schutzmaßnahmen verwendet werden dürfen.

Nach beispielsweise der EP-PS 0 122 762 beteht das Lösungsmittel eines derartigen wachshaltigen Korrosionsschutzmittels aus einem Gemisch von Petroleum und aromatischen Kohlenwasserstoffen. Aromatische Kohlenwasserstoffe sind aber ebenfalls stark gesundheitsschädlich, so daß diese Korrosionsschutzmittel genauso mit aufwendigen Schutzmaßnahmen angewendet werden müssen, wobei zusätzlich wegen der leichten Brennbarkeit der Lösungsmittel weitere aufwendige Sicherungsmaßnahmen erforderlich sind.

Ursprünglich hat man, wie beispielsweise aus der DE-PS 717.967 bekannt, zur Herstellung der korrosionsschützenden Überzüge mineralische Fette, Vaseline, Paraffine oder Wachse direkt verwendet, die in Fettheißtauchbädern aufgeschmolzen wurden, so daß dann durch Tauchen der Werkstücke in die Schmelze der korrosionsschützende Überzug hergestellt werden konnte. Die Handhabung der Fettheißtauchbäder im Betrieb aber ist schwierig. Durch langes Erhitzen der Schmelzen bilden sich Oxydationsprodukte der verwendeten Substanzen, es können sich aggressive Oxydationsprodukte in der Schmelze ausbilden, es entstehen im Prinzip ebenso gesundheitsgefährende Dämpfe, und die Substanzen werden im Laufe der Zeit unbrauchbar. Dazu besaßen die hergestellten Überzüge in vielen Anwendungsfällen nicht die geforderten Funktionseigenschaften, sie wurden zu dick oder sie blätterten mangels Haftung und wegen Sprödigkeit ab.

In FR-B-1 500 947 wird die Verwendung von partiellen Fettsäureestern in Korrosionsschutzmittel basierend auf Paraffin und/oder Wachsen beschrieben. Die Fettsäureester werden in einer Menge von 2 - 10% eingesetzt und dienen als Abtrennmittel.

Der vorliegenden Erfindung liegt daher die Aufgabe zugrunde, ein Korrosionsschutzmittel gemäß Oberbegriff des Hauptpatentanspruches zu schaffen, welches bei einfacher Handhabbarkeit korrosionsschützende Überzüge mit den gewünschten Funktionseigenschaften ohne gesundheitsgefährende Eigenschaften erzeugt.

Erfindungsgemäß wird diese Aufgabe durch ein Korrosionsschutzmittel aus 70 bis 85 Gewichtsteilen eines flüssigen Monocarbonsäureesters mit einem Siedepunkt über 400°C und einer Dichte von 0,8 bis 0,9 g/cm³ und 5 bis 10 Gewichtsteilen einer mineralischen Wachsmischung mit einem durchschnittlichen Molekulargewicht oberhalb 400 bis etwa 600, einem Erstarrungspunkt zwischen etwa 60 und 70°C und einem Mischungsverhältnis von n-Paraffinen zu iso-Paraffinen zwischen 0,5 bis 2 zu etwa 2 bis 0,5.

Zur Herstellung des erfindungsgemäßen Korrosionsschutzmittels wird das mineralische Wachs im erhitzten Monocarbonsäureester gelöst, wobei sich eine klare, niedrig viskose Lösung mit etwa der Viskosität des Monocarbonsäureesters bildet. Nach dem Abkühlen entsteht ein erstarrtes weiches Produkt mit salbenartiger pastöser Konsistenz. Dabei ist durch das gute Retentionsvermögen der Wachse der Monocarbonsäureester an das Wachs gebunden, ohne daß es auch nach längerer Lagerung oder durch den Transport zu Entmischungen mit Ausblutungen des Monocarbonsäureesters kommt.

Zur Herstellung der korrosionsschützenden Überzüge durch Eintauchen der Werkstücke wird das Korrosionsschutzmittel in Heißtauchbädern wieder aufgeschmolzen, wobei bei Temperaturen von etwa dem Schmelzpunkt der verwendeten Wachse klare, niedrig viskose Flüssigkeiten entstehen. Durch den erfindungsgemäßen Einsatz des hoch siedenden Monocarbonsäureesters mit seinem hohen einheitlichen Siedepunkt sind im Korrosionsschutzmittel keine niedrig siedenden Substanzen vorhanden. Es entstehen vorteilhaft keine schädlichen Dämpfe mit Eindickungen und Verharzungen der Schmelze. Ebenso ist das Korrosionsschutzmittel weitgehend bei diesen Temperaturen oxidationsunempfindlich, so daß keine schädlichen Oxidationsprodukte mit Alterungserscheinungen sich ausbilden können.

Die beim Erhitzen entstandene Korrosionsschutzmittelflüssigkeit besitzt bei niedriger Viskosität eine geringe Oberflächenspannung, so daß beim Eintauchen der metallischen Werkstücke diese auch bei geometrisch komplizierter Form gleichmäßig benetzt werden.

Nach dem Herausziehen der Werkstücke, Abtropfen der überschüssigen Flüssigkeit und Abkühlen ist ein gleichmäßig dicker, pastöser Überzug auf den Werkstücken entstanden, der das Werkstück ganzflächig versiegelt und dadurch vor von außen einwirkenden korrodierenden Einflüssen schützt. Der gebildete Überzug ist griffest und besitzt eine gute Haftung auf dem Werkstück, so daß er auch nach längerer Lagerung oder bei Handhabung nicht beschädigt wird. Dadurch bleibt das Werkstück ganzflächig vor Korrosion geschützt.

Nässungen mit Ausblutungen von Flüssigkeiten wurden auch nach längerer Lagerung nicht festgestellt, so daß verpackte Werkstücke keine durchnässten und dadurch beschädigte Verpackungspapiere bildeten. Die erfindungsgemäß hergestellten Überzüge waren nicht klebend. Verklebungen der Werkstücke mit dem Verpackungsmaterial und untereinander wurden nicht festgestellt, so daß die Werkstücke problemlos ausgepackt und vereinzelt und insbesondere vollautomatisch weiter verarbeitet werden können.

Falls erforderlich, können die Überzüge vor der Montage mit einfachen Mitteln, insbesondere durch Lösen und Waschen mit heißem Wasser oder durch Wasserdampfbehandlung, wieder entfernt werden.

Zur Verbesserung der Korrosionsschutzwirkung und zur Verbesserung seiner Haltbarkeit und Wirkung kann das Korrosionsschutzmittel die an und für sich bekannten Zusatzmittel, wie Alterungsschutzmittel, Lichtschutzmittel, Ozonschutzmittel, Oxidationsschutzmittel und/oder Benetzungsmittel, enthalten. Verwendet werden vor allem Zusatzmittel auf der Basis von Alkanolamiden, Sulfonaten und/oder Phosphorsäureestern in Mineralölen, die bis zu etwa 15 Gewichtsteilen der Rezeptur zugegeben werden.

Bevorzugt werden dazu etwa 85- bis 95-prozentige Lösungen in Mineralöl verwendet, wobei darauf geachtet wird, daß der Gesamtmineralölgehalt in der Rezeptur nicht über etwa 1,5 % liegt. Dadurch enthält das erfindungsgemäße Korrosionsschutzmittel keine größeren Anteile an leichter flüchtigen und/oder oxidierenden und verharzenden Bestandteilen, und das Korrosionsschutzmittel kann vor allem im Heißtauchbad mit langer Lebensdauer und ohne Veränderung seiner Eigenschaften eingesetzt werden.

Durch die Erfindung ist somit ein Korrosionsschutzmittel zur Herstellung korrosionsschützender Überzüge auf metallischen Werkstücken geschaffen, welches aufgrund seiner gesundheitlich unbedenklichen Eigenschaften und seiner schweren Entflammbarkeit und guten Beständigkeitswerte problemlos und dadurch wirtschaftlich gerade bei Massenproduktion eingesetzt werden kann. Die hergestellten Überzüge sind funktionsmäßig einwandfrei, und ihre Haltbarkeit reicht für die in der Praxis üblichen Anwendungsfälle aus.

Bevorzugt werden mit dem erfindungsgemaßen Korrosionsschutzmittel Kleinteile aus Gußeisen oder Stahl, wie insbesondere Kolbenringe oder andere Dichtteile für Verbrennungskraftmaschinen, vor Korrosion von der Fertigung bis zum Einbau geschützt.

Im Sinne der Erfindung kann das erfindungsgemäße Korrosionsschutzmittel jedoch auch für andere Werkstücke, beispielsweise Werkzeuge oder andere Maschinenteile, verwendet werden. Die Werkstücke können dabei auch aus Nichteisenmetallen und deren Legierungen bestehen. Bevorzugt werden in Massenproduktion gefertigte Werkstücke mit dem erfindungsgemäßen Korrosionsschutzmittel geschützt.

Gegebenenfalls können jedoch auch Einzelteile oder größere und sperrige Werkstücke sowie gegebenenfalls sogar fertig montierte Vorrichtungen oder Maschinen mit dem erfindungsgemäßen Korrosionsschutzmittel behandelt werden. Falls erforderlich, kann dabei das Korrosionsschutzmittel auch durch andere Verfahren, zum Beispiel Anspritzen oder Aufstreichen und Aufwalzen, aufgetragen werden.

## Patentansprüche

1. Korrosionsschutzmittel für die Herstellung korrosionsschützender Überzüge auf metallischen Werkstücken für die Lagerung bis zu ihrem Einbau, basierend auf einer Lösung von Wachs in einem Lösungsmittel, dadurch gekennzeichnet, daß das Korrosionsschutzmittel aus einer Lösung von 5 bis 10 Gewichtsteilen einer mineralischen Wachsmischung mit einem durchschnittlichen Molekulargewicht oberhalb 400 bis 600, einem Erstarrungspunkt zwischen 60 und 70°C und einem Mischungsverhältnis von n-Paraffinen zu iso-Paraffinen von 0,5 bis 2 zu 2 bis 0,5 in 70 bis 85 Gewichtsteilen eines flüssigen Monocarbonsäureesters mit einem Siedepunkt über 400°C, einem Flammpunkt über 180°C und einer Dichte von 0,8 bis 0,9 g/cm³ besteht.

2. Korrosionsschutzmittel nach Anspruch 1, dadurch gekennzeichnet, daß der verwendete Monocarbonsäureester im wesentlichen eine einheitliche Struktur mit einem definierten Siedepunkt besitzt.

3. Korrosionsschutzmittel nach den Anprüschen 1 und/oder 2, dadurch gekennzeichnet, daß das Korrosionsschutzmittel Antioxidantien, Ozonschutzmittel, Alterungsschutzmittel Lichtschutzmittel und/oder Benetzungsmittel als Zusatzmittel enthält.

4. Korrosionsschutzmittel nach mindestens einem der Ansprüche 1 bis 3, dadurch gekennzeichnet, daß die Zusatzmittel aus Alkanolamiden, Sulfonaten und/oder Phosphorsäureestern bestehen, und daß die Zusatzmittel in einer Lösung bis zu 8,5 % Mineralöl mit bis zu insgesamt 15 Gewichtsteilen dem Korrosionsschutzmittel des Anspruches 1 zugegeben sind, wobei der Gehalt an Minteralöl im Korrosionsschutzmittel den Wert von 1,5 Gewichtsteilen nicht übersteigt.

5. Verwendung des Korrosionsschutzmittels nach mindestens einem der Ansprüche 1 bis 4 zur Herstellung korrosionsschützender Überzüge auf kleinen Werkstücken aus Gußeisen oder Stahl für den Zeitraum der Lagerung, den Transport bis zur Weiterverwendung der Werkstücke.

## Claims

1. Anti-corrosive agent for the manufacture of anti-corrosive coatings on metal objects for storage until their installation based on a solution of wax in a solvent, characterised in that the anti-corrosive agent is composed of a solution of 5 to 10 parts by weight of a mineral wax mixture with an average molecular weight of above 400 to 600, a setting point of between 60 and 70 °C and a mixture ratio of n-paraffins to iso-paraffins of 0,5 - 2 to 2 - 0,5 in 70 to 85 parts by weight of a liquid monocarboxylic ester with a boiling point of over 400 °C, a flash point of over 180 °C and a density of 0,8 to 0,9 g/cm³.

2. Anti-corrosive agent according to Claim 1, characterised in that the monocarboxylic ester used has an essentially uniform structure with a defined boiling point.

3. Anti-corrosive agent according to Claims 1 and/or 2, characterised in that the anti-corrosive agent contains antioxidants, ozone protection agents, anti-ageing agents, light protection agents and/or wetting agents as additives.

4. Anti-corrosive agent according to at least one of Claims 1 to 3, characterised in that the additives consist of alkanolamides, sulphonates and/or phosphoric esters; and that the additives are added to the anti-corrosive agent according to claim 1 in a solution of up to 8,5 % mineral oil with up to 15 parts by weight in total, wherein the content of mineral oil in the anti-corrosive agent does not exceed the value of 1,5 parts by weight.

5. Application of the anti-corrosive agent according to at least one of Claims 1 to 4 for the manufacture of anti-corrosive coatings on small objects made of cast iron or steel for the period of their storage and for transport until further use of these objects.

## Revendications

1. Agent anticorrosif pour la fabrication de revêtement anticorrosif sur des pièces métalliques à usiner pour le stockage jusqu'à leur montage, à base d'une solution de cire dans un agent de dissolution, caractérisé en ce que l'agent anticorrosif consiste en une dissolution de 5 à 10 parties en poids d'un mélange de cire minérale avec un poids moléculaire moyen supérieur à 400 jusqu'à 600, un point de solidification entre 60 et 70 °C et un rapport de mélange des n-paraffines aux iso-paraffines de 0,5 à 2 sur 2 à 0,5, dans 70 à 85 parties en poids d'un ester d'acide monocarboxylique liquide avec un point d'ébullition supérieur à 400 °C, un point d'éclair supérieur à 180 °C et une densité de 0,8 à 0,9 g/cm³.

2. Agent anticorrosif selon la revendication 1, caractérisé en ce que l'ester d'acide monocarboxylique utilisé possède essentiellement une structure homogène avec un point d'ébullition défini.

3. Agent anticorrosif selon la revendication 1 et/ou la revendication 2, caractérisé en ce que l'agent anticorrosif contient des antioxygènes, des agents antiozones, des agents antivieillisseurs, des agents protecteurs de la lumière et/ou des agents mouillants en tant qu'agent d'addition.

4. Agent anticorrosif selon l'une au moins des revendications 1 à 3 caractérisé en ce que les agents d'addition sont constitués d'alcamide, de sulfonates et/ou d'ester d'acide phosphoriques, et en ce que les agents d'addition sont ajoutés à l'agent anticorrosif de la revendication 1 dans une solution de jusqu'à 8,5 % d'huile minérale avec jusqu'à en tout 15 parties en poids, la teneur en huile minérale dans l'agent anticorrosif ne dépassant pas la valeur de 1,5 parties en poids.

5. Utilisation de l'agent anticorrosif selon au moins une des revendications 1 à 4, pour la fabrication de revêtements anticorrosifs sur de petites pièces à usiner en fonte de fer ou en acier pour la durée du stockage, pour le transport, jusqu'à l'utilisation ultérieure des pièces à usiner.
